(19) Europäisches Patentamt
European Patent Office
Office européen des brevets

(11) Veröffentlichungsnummer: **0 499 277 A2**

# (12) EUROPÄISCHE PATENTANMELDUNG

(21) Anmeldenummer: **92102523.5**

(51) Int. Cl.5: **G01N 21/39**

(22) Anmeldetag: **14.02.92**

(30) Priorität: **14.02.91 DE 4104785**

(43) Veröffentlichungstag der Anmeldung:
**19.08.92 Patentblatt 92/34**

(84) Benannte Vertragsstaaten:
**AT BE CH DE DK ES FR GB GR IT LI LU NL PT SE**

(71) Anmelder: **Erwin Kayser-Threde GmbH**
**Wolfratshauser Strasse 48**
**W-8000 München 70(DE)**

(72) Erfinder: **Albrecht, Hannes, Dr.**
**Hohenschönhauser Strasse 24**
**O-1156 Berlin(DE)**

(74) Vertreter: **Hoffmann, Klaus, Dr. rer. nat. et al**
**Hoffmann . Eitle & Partner Patentanwälte**
**Postfach 81 04 20 Arabellastrasse 4**
**W-8000 München 81(DE)**

(54) **Verfahren zum Nachweis gasförmiger Substanzen.**

(57) Die Erfindung bezieht sich auf das Gebiet der Analysenmeßtechnik und kann für den Schadstoffnachweis in der Atmosphäre, zur Prozeßkontrolle chemischer Gasphasenreaktionen und zur Analyse von Abbrandprodukten, beispielsweise in der Laserchirurgie, eingesetzt werden.

Die Konzentrationsbestimmung der nachzuweisenden Substanzen erfolgt aus der Änderung der Modulationstiefe der Intensität der Strahlung eines im longitudinalen Zwei-Moden-Betrieb arbeitenden Lasers beim Durchgang durch das zu analysierende gasförmige Medium.

EP 0 499 277 A2

Die Erfindung bezieht sich auf das Gebiet der Analysenmeßtechnik und dient zum Nachweis gasförmiger Substanzen durch Absorption von vorzugsweise IR-Laserstrahlung. Sie kann für den Schadstoffnachweis in der Atmosphäre, zur Prozeßkontrolle chemischer Gasphasenreaktionen und zur Analyse von Abbrandprodukten, beispielsweise in der Laserchirurgie, eingesetzt werden.

Eine Übersicht bekannter Verfahren zum Nachweis gasförmiger Substanzen sowie eine Diskussion der Vorteile spektroskopischer, speziell laserspektroskopischer Verfahren findet man z.B. in P.L. Meyer and M.W. Sigrist Rev. Sci. Instrum. 61(7), July 1990, p. 1779(nachfolgend MS genannt). Spektroskopische Verfahren nutzen für den Nachweis das unterschiedliche Absorptionsverhalten der Moleküle, das z.B. im infraroten Spektralbereich aus der Struktur des Schwingungs-Rotations-Spektrums resultiert. Registriert wird die Abschwächung des optischen Signales auf einer bestimmten Wellenlänge nach dem Durchgang durch ein gasförmiges Medium, bzw. die im Medium absorbierte Lichtenergie z.B. mit einem opto-akustischen Detektor (MS). Neben der Absorption auf einer Wellenlänge, die für den nachzuweisenden Stoff charakteristisch ist, nutzt man die differentielle Absorption. Dabei wird das zu untersuchende Medium mit Licht auf mehreren, meist zwei, Wellenlängen gleichzeitig oder kurz nacheinander durchstrahlt und das unterschiedliche Absorptionsverhalten auf den verschiedenen Wellenlängen für die Analyse verwendet. Bekannt ist die DIAL-Methode, die differentielle Absorption mit LIDAR, bei der zwei Laserimpulse auf zwei verschiedenen Wellenlängen gleichzeitig bzw. kurz nacheinander ausgesendet werden, wobei eine Wellenlänge sich in Resonanz mit dem nachzuweisenden Stoff befindet, während die andere Wellenlänge von diesem Stoff nicht absorbiert wird. Die von den Aerosolen der Luft rückgestreuten und wieder empfangenen Signale auf den beiden Wellenlängen werden differenziert und daraus die Konzentration des nachzuweisenden Stoffes und über die Laufzeit der Lichtimpulse der Ort lokalisiert, an dem sich dieser Stoff befindet.

Für den Nachweis im infraroten Spektralbereich verwendet man Molekülgaslaser, speziell $CO_2$-Laser, als Sendelichtquelle und für die verschiedenen Wellenlängen Laserlinien auf verschiedenen Schwingungs-Rotations-Übergängen der lasernden Moleküle.

Allerdings liegen die Absorptionslinien verschiedener Stoffe im infraroten Bereich häufig spektral eng beieinander, so daß die Absorption auf einer Laserlinie zwar in unterschiedlichem Maße, aber doch von verschiedenen Stoffen bestimmt wird, was die Selektivität dieser Methode stark einschränkt. Hinzu kommt, daß die Absorptionsspektren zwar strukturiert, aber sehr breit sind. Hat nun auf der Resonanzlinie des nachzuweisenden Stoffes ein anderer Stoff zwar eine geringe Restabsorption, aber eine deutlich höhere Konzentration, so lassen sich beide Stoffe über die Absorption nicht voneinander unterscheiden. Diese Interferenzen bewirken z.B., daß durch die Absorption von Wasserdampf mit dieser Methode sich viele Stoffe in der Atmosphäre nicht nachweisen lassen und für viele andere Stoffe die minimal nachweisbare Konzentration in der Atmosphäre stark eingeschränkt ist (MS).

Der Erfindung liegt die Aufgabe zugrunde, ein Verfahren für den Nachweis gasförmiger Substanzen mittels IR-Laserstrahlung zu entwickeln, bei dem die Interferenzen zwischen den Absorptionen der verschiedenen Stoffe weitestgehend unterdrückt werden und damit die Selektivität für den Nachweis gegenüber den bekannten Nachweisverfahren mittels IR-Laserstrahlung deutlich gesteigert wird.

Erfindungsgemäß wird die Aufgabe dadurch gelöst, daß für den Nachweis die Strahlung eines Lasers verwendet wird, der im longitudinalen Zwei-Moden-Betrieb arbeitet und bei dem die Differenz der beiden Frequenzen der Moden im Bereich der Bandbreite der schmalen Resonanzen der stufenweisen IR-Mehrphotonen-Absorption der nachzuweisenden Substanzen liegt. Dabei ist eine der beiden Frequenzen auf eine der genannten schmalen Resonanzen abgestimmt. Für den Nachweis wird die infolge der Absorption auftretende Änderung der Modulationstiefe der Intensität der Strahlung des Zwei-Moden-Lasers genutzt.

Bekanntlich kommt es im Bereich der stufenweisen IR-Mehrphotonen-Absorption (IR-MA) zu einer weiteren Strukturierung des Absorptionsspektrums der Moleküle. Es treten schmale Resonanzen auf (I.N. Knyazev u.a. Appl. Phys. 22, 429-(1980) ). Dieses Unterscheidungsmerkmal wird für den Nachweis genutzt, indem man eine schmale Resonanz im IR-MA Spektrum des nachzuweisenden Stoffes auswählt, bei der alle übrigen Stoffe eine derartige Resonanz nicht aufweisen. Die elektromagnetischen Wellen auf den beiden Frequenzen der Moden werden dadurch von allen übrigen Stoffen gleich stark absorbiert, während sie durch den nachzuweisenden Stoff infolge der schmalen Resonanz unterschiedlich stark absorbiert werden, wenn die Frequenzen der Moden entsprechend auf die schmale Resonanz abgestimmt sind.

In einem Laser, der im longitudinalen Zwei-Moden-Betrieb arbeitet, kommt es durch die Wechselwirkung der elektromagnetischen Wellen auf den beiden Frequenzen zu einer Modulation der Intensität der Laserstrahlung. Die Tiefe der Modulation wird durch das Verhältnis der Intensitäten auf den beiden Frequenzen bestimmt und ändert sich durch die Absorption des nachzuweisenden Stoffes. Diese Änderung wird mit einem geeigneten Nachweissystem registriert. Alle übrigen Stoffe ändern dieses Intensitätsverhältnis nicht und liefern demzufolge keinen Beitrag zur Änderung der Modulationstiefe. Die Absorption der übrigen Stoffe kann deshalb beliebig größer sein als die Absorption des nachzuweisenden Stoffes.

Die Erfindung wird nachstehend an Ausführungsbeispielen näher erläutert.

In einem der Beispiele befindet sich das zu untersuchende Gasgemisch, z.B. atmosphärische Luft, in einer Absorptionsküvette. Es wird entweder stationär oder im Durchfluß in dieser Küvette gehalten. Für den Nachweis wird die Strahlung eines linienselektiv-durchstimmbaren TEA-$CO_2$-Lasers verwendet, der stabil im longitudinalen Zwei-Moden-Betrieb arbeitet, wobei der Frequenzabstand der beiden Moden etwa 0.017 cm$^{-1}$ beträgt. Der Laser ist auf einen dem nachzuweisenden Stoff entsprechenden Laserübergang abgestimmt. Ist der nachzuweisende Stoff z.B. $C_2H_4$, dann wird der Laser z.B. auf den 10P(26) Übergang des $CO_2$-Moleküls eingestellt. Ein Teil des Laserimpulses wird vor der Absorptionsküvette ausgeblendet und auf einen optischen Empfänger (z.B. photon-drag Empfänger) geleitet, der den Zeitverlauf des Laserimpulses in ein adäquates elektrisches Signal wandelt, das mit einem geeigneten elektronischen System weiterverarbeitet wird, wobei die Modulationstiefe ermittelt und abgespeichert wird. Nachdem der Laserimpuls die Absorptionsküvette durchstrahlt hat, wird in entsprechender Weise die Modulationstiefe der Intensität erneut ermittelt und mit dem Wert der Strahlung vor der Küvette verglichen. Aus der Änderung der Modulationstiefe bestimmt z.B. ein Computer, in dem die jeweiligen Eichdaten gespeichert sind, die Konzentration des nachzuweisenden Stoffes.

In einem weiteren Ausführungsbeispiel dient der oben beschriebene TEA-$CO_2$-Laser als Sendelichtquelle in einem DIAL-System. Nach dem Aussenden des Laserimpulses wird zu einem Zeitpunkt $t_1$ die Modulationstiefe des wieder empfangenen rückgestreuten Signales ermittelt und zu einem späteren Zeitpunkt $t_2$ erneut registriert. Aus der Änderung der Modulationstiefe wird die Konzentration des nachzuweisenden Stoffes im über die Laufzeit des Laserimpulses aus $t_1$ und $t_2$ gegebenen Entfernungsbereich $R_2 - R_1$ bestimmt. Durch diese Methode geht man gewissermaßen von einem Zwei-Wellenlängen-DIAL zu einem Zwei-Frequenz-DIAL über.

In einem wiederum anderen Ausführungsbeispiel wird die Strahlung des oben beschriebenen TEA-$CO_2$-Lasers aufgeweitet und auf eine Empfängermatrix gerichtet. Jedes Element der Matrix wandelt den Zeitverlauf des Laserimpulses in ein adäquates elektrisches Signal, das in einem geeigneten elektronischen System weiter verarbeitet wird, wobei die Modulationstiefe registriert und abgespeichert wird. Die Lichtstrecke ist so angeordnet, daß sie von einer sich entwickelnden Gaswolke (z.B. die Abbrandprodukte bei der Laserchirurgie) durchsetzt wird. Die Änderung der Modulationstiefe zeigt das Auftreten der entsprechenden Substanz an. Die Empfängermatrix ermöglicht die Ermittlung der Verteilung der Substanz in der Ebene senkrecht zur Ausbreitungsrichtung der Strahlung. Wird darüber hinaus der Laser mit einer Vorrichtung zum schnellen Durchstimmen der Wellenänge ausgerüstet, lassen sich im Verlauf der Ausbreitung der Wolke mehrere Substanzen diagnostizieren.

## Patentansprüche

1. Verfahren zum Nachweis gasförmiger Substanzen durch Absorption von vorzugsweise IR-Laserstrahlung, dadurch gekennzeichnet, daß die Konzentrationsbestimmung der Substanz aus der Änderung der Modulationstiefe der Intensität der Strahlung eines im longitudinalen Zwei-Moden-Betrieb arbeitenden Lasers beim Durchgang durch das zu analysierende gasförmige Medium erfolgt.

2. Verfahren nach Anspruch 1, dadurch gekennzeichnet, daß das zu analysierende Medium in einer Küvette stationär oder im Durchfluß gehalten wird.

3. Verfahren nach Anspruch 1, dadurch gekennzeichnet, daß der Zwei-Moden-Laser ein Impulslaser ist und als Sandelichtquelle in einem DIAL-System dient.

4. Verfahren nach Anspruch 1, dadurch gekennzeichnet, daß die Strahlung des Lasers auf eine Empfängermatrix gerichtet wird, wobei jedes Element der Matrix den Zeitverlauf der Intensität der Laserstrahlung in ein adäquates elektrisches Signal wandelt, aus dem die Modulationstiefe der Intensität bestimmt wird und daß das zu analysierende gasförmige Medium die Lichtstrecke als Wolke durchdringt.